# EUROPEAN PATENT SPECIFICATION

(11) **EP 1 894 076 B1**
(45) Date of publication and mention of the grant of the patent: **25.12.2013**
(21) Application number: 06720629.2
(22) Date of filing: 07.02.2006
(51) Int. Cl.: G05F 1/40, G05F 1/56

(54) **REGULATING SWITCHING REGULATORS BY LOAD MONITORING**
REGELUNG VON SCHALTREGLERN DURCH LASTÜBERWACHUNG
REGULATION DE REGULATEURS DE COMMUTATION PAR SURVEILLANCE DE CHARGES

(30) Priority: 07.02.2005 US 650945 P; 07.02.2005 US 650925 P
(43) Date of publication of application: 05.03.2008
(73) Proprietor: Analog Devices, Inc., Norwood, MA 02062 (US)
(72) Inventor: SHAMI, Hassan, B., Tracy, CA 95377 (US)
(74) Representative: Beck, Simon Antony
(86) International application number: PCT/US2006/004765
(87) International publication number: WO 2006/086651

(56) References cited:
- US-A- 5 434 532
- US-A- 5 511 118
- US-A- 5 511 118
- US-A- 5 557 670
- US-A1- 2004 051 382
- US-A1- 2004 051 382
- US-A1- 2004 207 463
- US-B1- 6 172 556
- US-B1- 6 348 780
- US-B1- 6 417 736
- US-B2- 7 157 809

## Description

The present invention relates to a method and apparatus for regulating a voltage.

In preferred embodiments, the present invention relates to power management and more particularly to power management circuits in integrated circuits.

A stable voltage level is often required to maintain a desired performance level in many electronic applications and voltage regulators are commonly used to control voltage levels of power supplies. Voltage levels in battery powered devices, in particular, can vary substantially based on charging level of the battery. Variations in voltage may affect legibility of display systems and quality of playback in audio devices. In conventional systems powered by unstable or varying power sources, voltage regulators are used to provide more consistent power supplies.

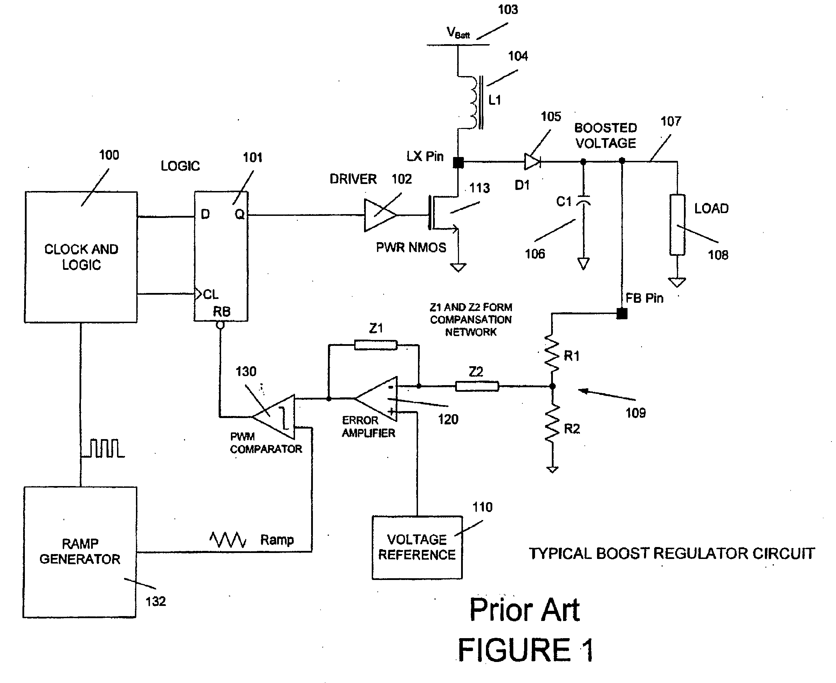

Referring to Figure 1, a representation of a typical prior art switching regulator is shown. An output voltage 107 is provided as the voltage maintained on a capacitor 106. The regulated output 107 is derived from an input voltage 103 by cycling a switching FET 113 using controller circuits 100, 101. When the switching FET 113 is closed, a current flows through an inductor 104. When the switching FET 113 is opened, a transient increase in voltage is observed across the inductor 104. This increase in voltage causes the capacitor 106 to be charged through a diode 105. At some point, the voltage across the inductor 104 falls to a level that reverse biases the diode 105. The frequency at which the switching FET is switched is selected to maintain a specified output voltage level.

The presence of a load 108 on the output voltage 107 impacts the selection of switching frequency. The effect of a variable load is counteracted by providing a feedback circuit that controls the charging of the capacitor 106. Therefore, a bridge circuit 109, an amplifier 120, a reference voltage source 110 and a comparator 130 are used for adjusting the clocking frequency to maintain a stable output voltage 107.

Inclusion of these feedback and control components reduces regulator efficiency, increases power dissipation with resulting temperature increases and increased die usage in a semiconductor device.
US-B-6417736 discloses a monolithic integrated circuit amplifier having a gain stage and a buffer stage.
US-A-2004/0207463 discloses an active filter for reducing the common mode current in a pulse width modulated drive circuit driving a load.
US-A-2004/0051382 discloses a circuit for improving the inductive DC converter delivery of regulated current into a load, wherein the inductive DC converter provides the output voltage to an ensemble consisting of the load and a current source connected in series with the load.
According to a first aspect of the present invention, there is provided a method for regulating an output voltage on an output load comprising the steps of: receiving an output voltage at a current source; providing, with the current source, a current to a reference load, the current source and reference load being in parallel with the output load; measuring, with a headroom detection circuit, a headroom voltage between the output load and the reference load, and adjusting the output voltage to maintain it within a desired operating tolerance based on the measured headroom voltage.
According to a second aspect of the present invention, there is provided an apparatus for regulating a voltage comprising: a voltage regulator for providing an output voltage to an output load; a current source for receiving the output voltage and for providing a current to a reference load, the current source and reference load being in parallel with the output load; a headroom detection circuit for providing a control signal indicative of a headroom voltage measured between the output load and the reference load; and control logic responsive to the control signal and configured to maintain the output voltage within a desired operating tolerance.

In embodiments, the present invention resolves many of the problems associated with switching voltage regulators and provides low cost solutions for regulating voltages while minimizing overall total power dissipation in battery-powered devices such as cellular telephones.

In embodiments, the present invention provides a voltage regulator that is controlled by monitoring voltage levels in a load through which a known current flows. The voltage in the load provides a feedback signal to a driving IC that may be used to control voltage output level. Thus, the output voltage level may be easily controlled with fewer components, resulting in reduced power consumption, increased efficiency and improved die utilization in ICs.

These and other aspects and features of the present invention will become apparent to those ordinarily skilled in the art upon review of the following description of specific embodiments of the invention in conjunction with the accompanying figures, wherein:

Figure 1 is a schematic drawing of a prior art voltage regulator; and

Figure 2 is a schematic drawing showing an example of a voltage regulator according to embodiments of the present invention;

Figure 3 is a graph plotting output voltage, LED current and control against time in one example of an embodiment of the present invention; and

Figure 4 is a schematic drawing showing a headroom detector according to embodiments of the present invention.

Embodiments of the present invention will now be described in detail with reference to the drawings, which are provided as illustrative examples so as to enable those skilled in the art to practice the invention. Notably, the figures and examples below are not meant to limit the scope of the present invention. Where certain elements of these embodiments can be partially or fully implemented using known components, only those portions of such known components that are necessary for an understanding of the present invention will be described, and detailed descriptions of other portions of such known components will be omitted so as not to obscure the invention. Further, the present invention encompasses present and future known equivalents to the components referred to herein by way of illustration.

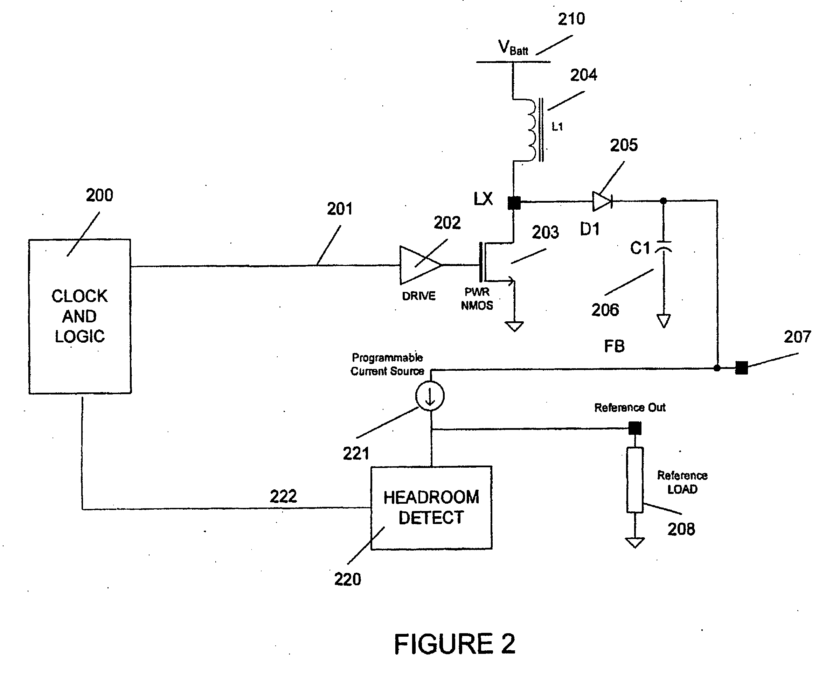

Referring to Figure 2, an example of a voltage regulator according to one embodiment of the present invention is depicted. In this example, control logic 200 provides a switching signal 201 that is received by a driver 202 for switching an FET 203. The frequency and duty cycle of the switching signal 201 are factors that can be used to control the voltage level of an output voltage 207 for a selected electrical load. Because variations in the electrical load may affect the level of the output voltage 207, certain embodiments of the present invention provide a feedback system for regulating the output voltage 207 under fixed and variable load conditions.

In certain embodiments, a current source 221 is provided to drive a reference load 208. The current source typically provides a selected current to the reference load 208 that causes a voltage drop across the reference load 208. For fixed resistive loads, the voltage drop can be calculated given the current produced by the current source 221. The difference between the output voltage 207 and the voltage dropped across the reference load 208 may be measured across the current source 221. This difference voltage is referred to hereinafter as the "headroom voltage." In certain embodiments, the headroom voltage can be monitored to regulate the output voltage 207. In at least some embodiments, a programmable voltage is provided, wherein the output voltage 207 may be selected by varying the reference load 208.

In the example provided in Figure 2, headroom voltage is monitored by a headroom detect component 220 that activates a headroom detect signal 222 upon detecting a minimum headroom voltage across the current source 221. The control logic 200 may adjust the duty cycle and switching frequency of the switching signal 201 based on the state of the headroom detect signal 222. In certain embodiments, the headroom detect signal 222 has an analog component indicative of the headroom voltage level. In certain embodiments, the headroom detect signal 222 is a digital signal encoded with one or more bits of information using any suitable coding scheme, including pulse width modulation, ASCII, BCD and pulse frequency modulation. In certain embodiments, the headroom detect signal 222 provides two states (ON and OFF) indicating whether or not the headroom voltage is greater than a threshold level.

In many embodiments, when the headroom detect signal 222 indicates that the output voltage 207 has exceeded a selected threshold, the rate of charging of capacitor 206 is decreased by a selected amount. Additionally, the rate charging of the capacitor 206 is typically increased when the headroom detect signal 222 indicates that output voltage 207 has dropped below the selected threshold. Therefore, by monitoring the headroom voltage, the output voltage 207 may be maintained around the threshold level. In certain embodiments, increases and decreases in charging may be selectively delayed and the proportion by which charging rates are altered delays can be configured based on system requirements.

It will be appreciated that the rise and fall of the output voltage 207 around the threshold voltage may appear as an alternating current ("AC") component superimposed on a direct current ("DC") voltage. Thus, in at least some embodiments, the AC component is removed using any commonly known filtering circuits.

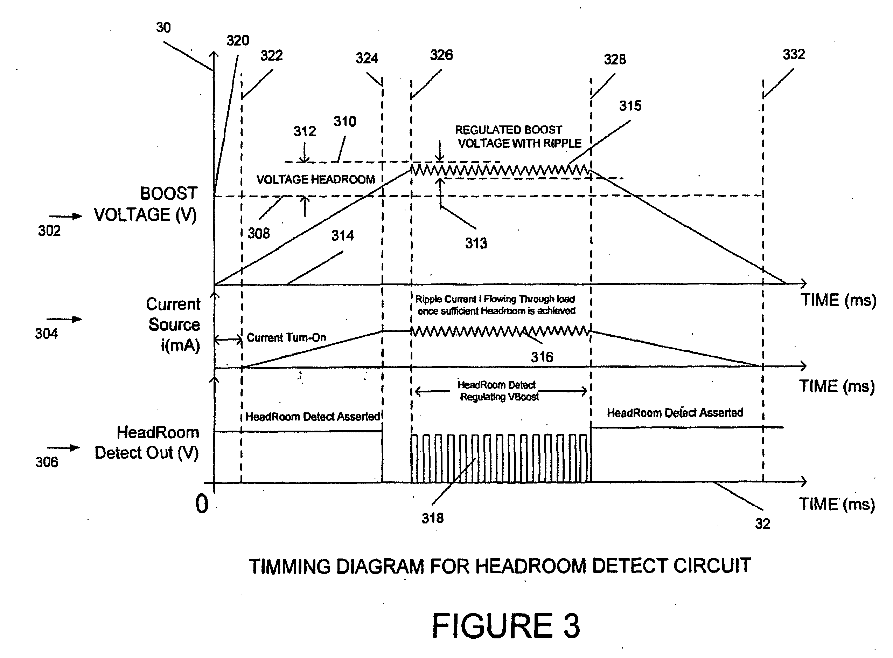

Now referring to Figures 2 and 3, timing relationships of various signals may be better understood using the example of an embodiment provided in Figure 2. The timing diagram of Figure 3 illustrates typical relationships of output voltage 207, source current 304 and headroom detect signal 222 against time 32. At a first time 320, when the output voltage 207 has a starting voltage level 314, headroom detect signal 222 is asserted, indicating that the output voltage is below a preferred minimum operating value. It will be appreciated that, in at least this example, an activated headroom detect signal 222 indicates that the voltage threshold has not been exceeded. Headroom detect signal 222 is typically received by the control logic 200 and, at some point determined by control logic 200 configuration, the switching signal 201 may begin clocking the FET 203 with a frequency and duty cycle calculated to increase the output voltage 207. It will be appreciated that the operation of the control logic 200 may be programmed by software or through configuration information provided at time of manufacture, initialization or by some other input method. Thus, the precise time at which the switching signal 201 begins cycling may be controlled by a programmed variable. It will also be appreciated that the duty cycle, frequency of switching and other characteristics of the switching signal 201 may be manipulated by software or other control to shape characteristics including, for example, ramp up of the output voltage 207 as it climbs to a preferred operating voltage level.

In the example, the output voltage reaches a preferred operating voltage 308 at a point in time 324 and headroom detect signal 222 is cleared. In some embodiments, the headroom detect signal may be used to control capacitor 27 is charging rates. In response to the change in headroom detect signal 222, the control logic 200 may modify the characteristics of the switching signal 201 to achieve operation within a desired tolerance 312 of the preferred operating voltage 308. It will be appreciated that an AC component 315 may be present on the output voltage 207. In at least some embodiments of the invention, the control logic 200 may be configured to adapt the characteristics of the switching signal 201 to minimize the amplitude associated with the AC component 315. For example, the amplitude of the AC component 315 may be reduced by using a higher frequency switching signal 201 combined with a low-pass filter.

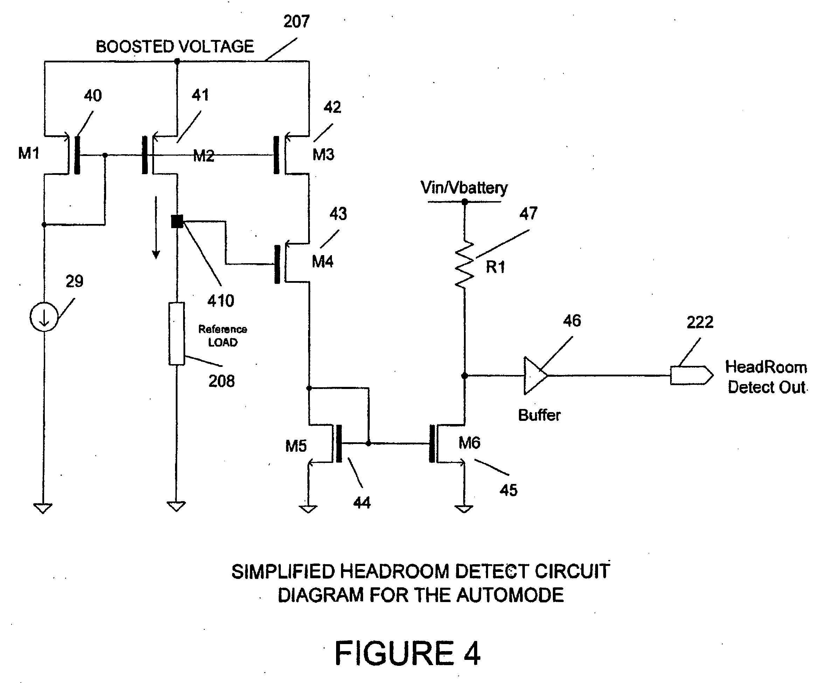

The schematic drawing of Figure 4 shows an example of a headroom detect circuit implemented in certain embodiments of the invention. A current source 29 sets the current in FET M1 40. This current is mirrored in FET M2 41 and FET M3 42. The current flowing in M3 42 sets a current in FET M5 44 through FET M4 43. M4 43 acts as a switch, being driven by the reference load output pin 410. FET M6 45 mirrors the current through M5 44, causing a voltage drop across resistor R1 47. A buffer 46 sets headroom detect signal 222 based on the voltage drop measured across R1 47, wherein the buffer 46 provides either an active high or active low control signal as required. As the output voltage 207 increases and sufficient headroom is attained, headroom detect signal 222 is cleared. M4 43 turns off as output voltage 207 is increased, thereby causing M6 45 to turn off. With M6 45 turned off, voltage across R1 47 drops causing the input to the buffer 46 to rise to level of battery voltage 210 until the input voltage crosses a selected switchover point. This change is detected by buffer device 46 and causes the clearing of the headroom detect signal 222. It will be appreciated that the switchover point of the buffer device 46 can be selected as desired

It should be apparent that aspects of the invention provide, not only for automatic selection of output voltage, but also for dynamic selection of output voltage. This aspect not only provides flexibility in design, but also optimizes power consumption in devices in certain embodiments. Power consumption can be minimized because the headroom voltage is always maintained at minimum levels required by operating conditions.

## Claims

1. A method for regulating an output voltage (207) on an output load comprising the steps of:
receiving an output voltage (207) at a current source (221);
providing, with the current source (221), a current to a reference load (208), the current source (221) and reference load (208) being in parallel with the output load;
measuring, with a headroom detection circuit (220), a headroom voltage, that is the difference between the output voltage (207) and the voltage drop across the reference load (208); and,
adjusting the output voltage (207) to maintain it within a desired operating tolerance based on the measured headroom voltage.

2. A method according to claim 1, wherein the output voltage (207) is received from a switching regulator controlled by a clocking signal (201).

3. A method according to claim 2, wherein the step of adjusting includes modifying a switching frequency of the clocking signal (201).

4. A method according to claim 2, wherein the step of adjusting includes modifying a duty cycle of the clocking signal (201).

5. A method according to claim 1, wherein the step of adjusting includes:
selectively increasing the output voltage (207) in response to assertion of a headroom detection signal (222); and,
selectively decreasing the output voltage (207) when the headroom detection signal (222) is cleared.

6. A method according to claim 5, wherein:
the headroom detection signal (222) is asserted when the headroom voltage falls below a minimum desired headroom voltage, and
the headroom detection signal (222) is cleared when the output voltage (207) reaches a preferred operating voltage.

7. A method according to claim 1, wherein the headroom detection circuit (220) provides a control signal (222) indicative of the headroom voltage.

8. A method according to claim 7, wherein the control signal (222) includes an analog component.

9. A method according to claim 7, wherein the control signal (222) is a binary signal.

10. A method according to claim 7, wherein the control signal (222) is digitally encoded.

11. A method according to claim 7, wherein the control signal (222) is encoded using one or more modulations including pulse width modulation and pulse frequency modulation.

12. A method according to claim 1, wherein the step of adjusting includes:
increasing a duty cycle of a clocking signal (201) when the headroom voltage is less than a desired minimum voltage, wherein the clocking signal (201) controls the output voltage (207); and,
selectively decreasing the duty cycle of the clocking signal (201) when the headroom voltage is greater than a predetermined value.

13. A method according to claim 7, wherein the step of adjusting includes selecting a duty cycle and a clocking frequency of a clocking signal (201) responsive to the control signal, wherein the clocking signal (201) controls the output voltage (207).

14. An apparatus for regulating an output voltage (207) on an output load comprising:
a voltage regulator for providing an output voltage (207) to an output load;
a current source (221) for receiving the output voltage (207) and for providing a current to a reference load (208), the current source (222) and reference load (208) being in parallel with the output load;
a headroom detection circuit (220) for providing a control signal (222) indicative of a measured headroom voltage, that is the difference between the output voltage (207) and the voltage drop across the reference load (208); and,
control logic (200) responsive to the control signal (222) and configured to maintain the output voltage (207) within a desired operating tolerance based on the measured headroom voltage.

15. An apparatus according to claim 14, wherein the voltage regulator is a switching regulator and the control logic provides a clocking signal (201) to the regulator.

16. An apparatus according to claim 15, wherein the control logic (200) controls the output voltage (222) by adjusting characteristics of the clocking signal (201), including switching frequency and duty cycle.

## Patentansprüche

1. Verfahren zum Regeln einer Ausgangsspannung (207) an einer Ausgangslast, mit den Schritten:
Empfangen einer Ausgangsspannung (207) an einer Stromquelle (221);
Liefern eines Stroms von der Stromquelle (221) an eine Referenzlast (208), die Stromquelle (221) und die Referenzlast (208) sind parallel zur Ausgangslast geschaltet;
Messen einer Kopfraumspannung mit einer Kopfraumerfassungsschaltung (220), also die Differenz zwischen der Ausgangsspannung (207) und dem Spannungsabfall über der Referenzlast (208); und
Einstellen der Ausgangsspannung (207), um diese basierend auf der gemessenen Kopfraumspannung innerhalb einer gewünschten Betriebstoleranz zu halten.

2. Verfahren nach Anspruch 1, wobei die Ausgangsspannung (207) von einem Schaltregler empfangen wird, der von einem Taktsignal (201) gesteuert wird.

3. Verfahren nach Anspruch 2, wobei der Schritt zum Einstellen das Abändern einer Schaltfrequenz des Taktsignals (201) umfasst.

4. Verfahren nach Anspruch 2, wobei der Schritt zum Einstellen das Abändern eines Tastverhältnisses des Taktsignals (201) umfasst.

5. Verfahren nach Anspruch 1, wobei der Schritt zum Einstellen umfasst:
wahlweise Erhöhen der Ausgangsspannung (207) in Antwort auf ein Vorliegen des Kopfraumerfassungssignals (222); und
wahlweise Senken der Ausgangsspannung (207), wenn das Kopfraumerfassungssignal (222) gelöscht ist.

6. Verfahren nach Anspruch 5, wobei:
das Kopfraumerfassungssignal (222) vorliegt, wenn die Kopfraumspannung unterhalb einer minimalen, gewünschten Kopfraumspannung fällt, und
das Kopfraumerfassungssignal (222) gelöscht wird, wenn die Ausgangsspannung (207) eine bevorzugte Betriebsspannung erreicht.

7. Verfahren nach Anspruch 1, wobei die Kopfraumerfassungsschaltung (220) ein Steuersignal (222) liefert, das ein Indikator für die Kopfraumspannung ist.

8. Verfahren nach Anspruch 7, wobei das Steuersignal (222) eine analoge Komponente aufweist.

9. Verfahren nach Anspruch 7, wobei das Steuersignal (222) ein binäres Signal ist.

10. Verfahren nach Anspruch 7, wobei das Steuersignal (222) digital codiert ist.

11. Verfahren nach Anspruch 7, wobei das Steuersignal (222) unter Verwendung einer oder mehrerer Modulationen einschließlich Pulsweitenmodulation und Pulsfrequenzmodulation codiert ist.

12. Verfahren nach Anspruch 1, wobei der Schritt zum Einstellen umfasst:
Erhöhen eines Tastverhältnisses eines Taktsignals (201), wenn die Kopfraumspannung kleiner als eine gewünschte, minimale Spannung ist, wobei das Taktsignal (201) die Ausgangsspannung (207) steuert; und
wahlweise Erniedrigen des Tastverhältnisses des Taktsignals (201), wenn die Kopfraumspannung größer als ein vorgegebener Wert ist.

13. Verfahren nach Anspruch 7, wobei der Schritt zum Einstellen das Auswählen eines Tastverhältnisses und einer Taktfrequenz eines Taktsignals (201) in Antwort auf das Steuersignal umfasst, wobei das Taktsignal (201) die Ausgangsspannung (207) steuert.

14. Vorrichtung zum Regeln einer Ausgangsspannung (207) an eine Ausgangslast, mit:
einem Spannungsregler zum Liefern einer Ausgangsspannung (207) an eine Ausgangslast;
einer Stromquelle (221) zum Empfangen der Ausgangsspannung (207) und Liefern eines Stroms an eine Referenzlast (208), wobei die Stromquelle (222) und die Referenzlast (208) parallel mit der Ausgangslast geschalten sind;
einer Kopfraumerfassungsschaltung (220) zum Liefern eines Steuersignals (222), das als Indikator für eine gemessene Kopfraumspannung dient, also für die Differenz zwischen der Ausgangsspannung (207) und dem Spannungsabfall über der Referenzlast (208);
und einer Steuerlogik (200), die auf das Steuersignal (222) anspricht und konfiguriert ist, um die Ausgangsspannung (207) innerhalb einer gewünschten Betriebstoleranz basierend auf der gemessenen Kopfraumspannung zu halten.

15. Vorrichtung nach Anspruch 14, wobei der Spannungsregler ein Schaltregler ist und die Steuerlogik ein Taktsignal (201) an den Regler liefert.

16. Vorrichtung nach Anspruch 15, wobei die Steuerlogik (200) die Ausgangsspannung (207) durch Einstellen von Eigenschaften des Taktsignals (201) einschließlich Schaltfrequenz und Tastverhältnis steuert.

## Revendications

1. Procédé de régulation d'une tension de sortie (207) sur une charge de sortie, comprenant les étapes suivantes:
réception d'une tension de sortie (207) à une source de courant (221);
fourniture, à l'aide de la source de courant (221), d'un courant à une charge de référence (208), la source de courant (221) et la charge de référence (208) étant en parallèle avec la charge de sortie ;
mesure, à l'aide d'un circuit de détection de hauteur libre (220), d'une tension de hauteur libre qui correspond à la différence entre la tension de sortie (207) et la chute de tension en travers de la charge de référence (208); et
réglage de la tension de sortie (207) afin de maintenir celle-ci à l'intérieur d'une tolérance de fonctionnement souhaitée basée sur la tension de hauteur libre mesurée.

2. Procédé selon la revendication 1, dans lequel la tension de sortie (207) est reçue à partir d'un régulateur de commutation qui est commandé par un signal d'horloge (201).

3. Procédé selon la revendication 2, dans lequel l'étape de réglage comprend la modification d'une fréquence de commutation du signal d'horloge (201).

4. Procédé selon la revendication 2, dans lequel l'étape de réglage comprend la modification d'un cycle de service du signal d'horloge (201).

5. Procédé selon la revendication 1, dans lequel l'étape de réglage comprend:
l'augmentation sélective de la tension de sortie (207) en réponse à l'affirmation d'un signal de détection de hauteur libre (222); et
la diminution sélective de la tension de sortie (207) lorsque le signal de détection de hauteur libre (222) est supprimé.

6. Procédé selon la revendication 5, dans lequel:
le signal de détection de hauteur libre (222) est affirmé lorsque la tension de hauteur libre chute en dessous d'une tension de hauteur libre minimum souhaitée; et
le signal de détection de hauteur libre (222) est supprimé lorsque la tension de sortie (207) atteint une tension de fonctionnement préférée.

7. Procédé selon la revendication 1, dans lequel le circuit de détection de hauteur libre (220) fournit un signal de commande (222) indicatif de la tension de hauteur libre.

8. Procédé selon la revendication 7, dans lequel le signal de commande (222) comprend une composante analogique.

9. Procédé selon la revendication 7, dans lequel le signal de commande (222) est un signal binaire.

10. Procédé selon la revendication 7, dans lequel le signal de commande (222) est codé numériquement.

11. Procédé selon la revendication 7, dans lequel le signal de commande (222) est codé en utilisant une ou plusieurs modulation(s) comprenant une modulation de largeur d'impulsion et une modulation de fréquence d'impulsion.

12. Procédé selon la revendication 1, dans lequel l'étape de réglage comprend:
l'augmentation d'un cycle de service d'un signal d'horloge (201) lorsque la tension de hauteur libre est inférieure à une tension minimum souhaitée, dans lequel le signal d'horloge (201) commande la tension de sortie (207); et
la diminution sélective du cycle de service du signal d'horloge (201) lorsque la tension de hauteur libre est supérieure à une valeur prédéterminée.

13. Procédé selon la revendication 7, dans lequel l'étape de réglage comprend la sélection d'un cycle de service et d'une fréquence d'horloge d'un signal d'horloge (201) sensibles au signal de commande, dans lequel le signal d'horloge (201) commande la tension de sortie (207).

14. Dispositif pour réguler une tension de sortie (207) sur une charge de sortie, comprenant:
un régulateur de tension pour fournir une tension de sortie (207) à une charge de sortie;
une source de courant (221) pour recevoir la tension de sortie (207) et pour fournir un courant à une charge de référence (208), la source de courant (221) et la charge de référence (208) étant en parallèle avec la charge de sortie;
un circuit de détection de hauteur libre (220) pour produire un signal de commande (222) indicatif d'une tension de hauteur libre mesurée, qui correspond à la différence entre la tension de sortie (207) et la chute de tension en travers de la charge de référence (208); et
une logique de commande (200) sensible au signal de commande (222) et configurée de manière à maintenir la tension de sortie (207) à l'intérieur d'une tolérance de fonctionnement souhaitée basée sur la tension de hauteur libre mesurée.

15. Dispositif selon la revendication 14, dans lequel le régulateur de tension est une régulateur de commutation, et la logique de commande envoie un signal d'horloge (201) au régulateur.

16. Dispositif selon la revendication 15, dans lequel la logique de commande (200) commande la tension de sortie (207) en réglant les caractéristiques du signal d'horloge (201), y compris la fréquence de commutation et le cycle de service.
